# EUROPEAN PATENT APPLICATION

(11) **EP 1 547 851 A2**
(43) Date of publication of application: **29.06.2005**
(21) Application number: 04027685.9
(22) Date of filing: 22.11.2004
(51) Int. Cl.: B60L 5/00

(54) **Track guided vehicle system**

(30) Priority: 26.12.2003 JP 2003432428
(71) Applicant: MURATA KIKAI KABUSHIKI KAISHA, Minami-ku Kyoto-shi Kyoto 601 (JP)
(72) Inventor: Nakao, Takashi, Neyagawa-shi Osaka (JP); Nakamura, Yoichi, Nagaokakyo-shi Kyoto (JP)
(74) Representative: Liedl, Christine

(57) **Abstract**

A track guided vehicle is run using longitudinal paired bogie vehicles 70a, 70b. Electricity receiving units 12 are arranged on the right and left side of one of the bogie vehicles. Communication units 50 are arranged on the right and left side of the other bogie vehicle. The electricity receiving units or communication units are connected to a rotative movement shaft of each bogie vehicle so as to move rotatively depending on a change in the direction of running wheels 22. By minimizing the amount of electricity feeding lines laid in a branching portion, it is possible to continuously feed electricity to the track guided vehicle (Fig. 1).

## Description

### Field of the Invention

The present invention relates to feeding of electricity to a track guided vehicle, and in particular, to the ability to continuously feed electricity to a track guided vehicle even in a branching portion.

### Background of the Invention

In a track guided vehicle system, a track guided vehicle is allowed to run along a running track. The track guided vehicle is fed with electricity from the running track or an electricity feeding track parallel to the running track.
In this case, if the running track is curved or branched, feeding of electricity to the track guided vehicle becomes unstable.

The Japanese Patent No. 3298348 discloses paired electricity receiving units provided in the front and rear of a track guided vehicle so that each of the electricity receiving units can be shifted along a running track in a direction perpendicular to the running track. This enables the track guided vehicle to stably receive electricity even at a curve. However, in a branching portion, the track guided vehicle cannot receive electricity at a certain position. For operation of the track guided vehicle system, the track guided vehicle can preferably receive electricity at any positions. When the track guided vehicle can receive electricity at any positions, it can be stopped at an arbitrary position and then reactivated at that position. If the track guided vehicle fails to receive electricity at any position and if it is stopped at that position in order to avoid a collision or because of a service interruption or the like, then it cannot be reactivated.

It is an object of the present invention to provide a track guided vehicle system that enables a track guided vehicle to stably receive electricity not only at a curve but also in a branching portion.

It is an additional object of the aspect of the present invention in Claim 2 to allow not only the reception of electricity but also communication with a controller or the like to be stably accomplished even at a curve or in a branching portion. Further, according to this aspect, electricity feeding and communication lines have only to be laid within a minimum required range of a branching portion.

It is an additional object of the aspect of the present invention in Claim 3 to facilitate reception of electricity at a curve and in a branching portion.

It is another object of this aspect to allow electricity receiving units to be easily removed.

### Summary of the Invention

The present invention provides a track guided vehicle system comprising an electricity feeding line laid parallel with a running track and bogie vehicles rotatively movably connected to a track guided vehicle main body, the bogie vehicles being guided by the running track to run, the track guided vehicle system being characterized in that electricity receiving units are provided on the right and left side of the bogie vehicle.

Preferably, the bogie vehicles are provided in a front and rear of a track guided vehicle, and electricity receiving units are provided on the right and left side of one of the bogie vehicles, while communication units are provided on the right and left side of the other bogie vehicle (Claim 2). Particularly preferably, the electricity feeding line is also used as a communication line. Different frequencies are used for feeding and for communication so that the electricity feeding line can be used to carry out both electricity feeding and communication.

Preferably, the electricity receiving units are connected to a rotative movement shaft of the bogie vehicle that can move rotatively with respect to the track guided vehicle main body (Claim 3).

In a track guided vehicle system according to the present invention, the electricity receiving units are mounted on the right and left side of the bogie vehicle. Thus, when the bogie vehicle runs and follows a curve in a running track, while changing its posture, the electricity receiving units follow the bogie vehicle to enable the bogie vehicle to reliably receive electricity. In a branching portion, the electricity feeding line is laid both on a rectilinear side and on a branching side of the running track. In other words, the electricity feeding line is laid on the right and left side of the running track, that is, a track guided vehicle, in a branching portion. For example, one of the electricity feeding lines is laid at an outlet side of the branching portion along the rectilinear running track, while the other electricity feeding line is laid at the outlet side of the branching side and so on along the running track. Thus, in the branching portion, one of a right and left electricity receiving units can receive electricity from the rectilinear side electricity feeding line. The other electricity receiving unit can receive electricity from the branching side electricity feeding line. During a branching operation, even if one of the electricity receiving units is separated from the corresponding electricity feeding line, the other electricity receiving unit can receive electricity from the branching electricity feeding line. This enables the track guided vehicle to receive electricity all along the running track except for, for example, a maintenance area. Consequently, the track guided vehicle can be stopped at an arbitrary position. Even when the track guided vehicle is stopped at an arbitrary position because of a service interruption or the like, it can be reactivated at that position.

According to the aspect of the present invention in Claim 2, reception of electricity and communication with a controller or the like can be reliably carried out even at a curve or in a branching portion. This aspect also minimizes the amount of electricity feeding or communication lines laid in the branching portion. For example, the branching side electricity feeding or communication lines may be laid starting at a starting portion of a branch so as to prevent the rectilinear side electricity feeding or communication lines from being used simultaneously with the branching side electricity feeding or communication lines. Even in this case, electricity receiving units or communication units are reliably connected to the rectilinear side or branching side electricity feeding or communication lines. Consequently, reception of electricity and communication can be accomplished at any positions.

According to the aspect of the present invention in Claim 3, the electricity receiving units are connectively attached directly or indirectly to a shaft around which the bogie vehicle is rotatively moved with respect to a track guided vehicle main body. Thus, if the electricity feeding line is provided at a height different from that of the running track, the electricity receiving units and the bogie vehicle can be easily installed at different heights. Further, the electricity receiving units can automatically change their directions in unison with rotative movement of the bogie vehicle. Moreover, the electricity receiving units can be installed and removed from either side of the shaft.

### Brief Description of the Drawings

Figure 1 is a sectional view showing essential parts of a track guided vehicle, a running track, and an electricity feeding track used according to an embodiment of the present invention.
Figure 2 is a plan view showing how an electricity receiving unit is attached to a rotative movement side of a bogie vehicle according to the embodiment.
Figure 3 is a front view showing how a communication unit is attached to a rotative movement shaft of the bogie vehicle according to the embodiment.
Figure 4 is a plan view schematically showing how electricity receiving units and communication units of a front and rear bogie vehicles are arranged with respect to electricity feeding lines also used as communication lines.
Figure 5 is a diagram schematically showing how the electricity receiving units and communication units are arranged at a curve with respect to the electricity feeding lines also used as communication lines.
Figure 6 is a diagram showing how the electricity feeding lines also used as communication lines are arranged in a branching portion and how the electricity receiving units and communication units are arranged with respect to the electricity feeding lines in the branching portion.

### Detailed Description of the Preferred Embodiments

An optimum embodiment for carrying out the present invention will be shown below.

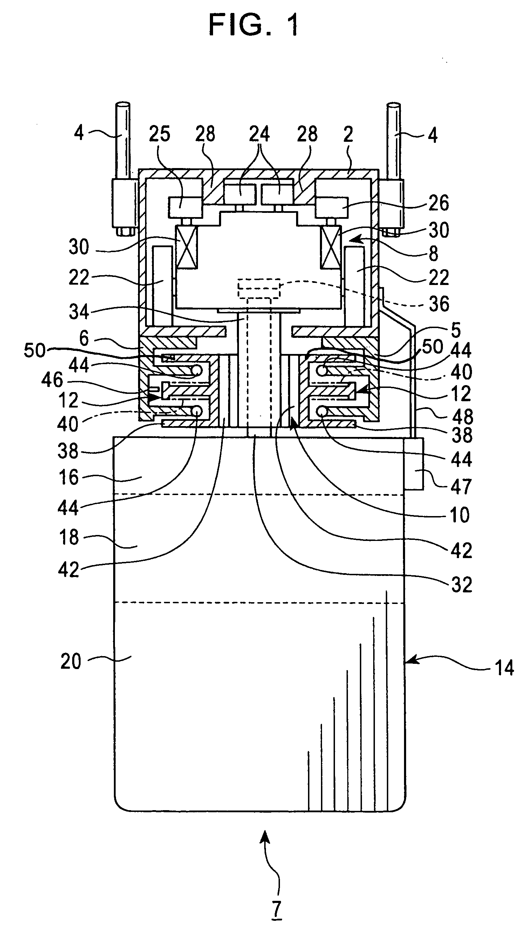

Figures 1 to 6 show an embodiment. Figure 1 shows the relationship between an overhead running vehicle 7 and a running track 2 or electricity feeding tracks 5, 6. The running track 2 is suspended from a ceiling of a clean room using hanging bolts 4 and so on. A right and left electricity feeding tracks 5, 6 are, for example, fittingly mounted at the bottom of the running track 2. The overhead running vehicle 7 is composed of a running section 8, an electricity feeding section 10, and an overhead running vehicle main body 14. The overhead running vehicle main body 14 has a lateral feeding section 18, an elevation driving section 18, and a platform 20. The lateral feeding section 16 laterally feeds the elevation driving section 18 and the platform 20 perpendicularly to the running track 2. The elevation driving section 18 elevates and lowers the platform 20 to rotatively move the platform 20 in a horizontal plane. Further, the platform 20 chucks a conveyed article such as a semiconductor cassette (not shown in the drawings) or conveys it while supporting its bottom surface.

The running section 8 is provided with, for example, lateral paired running wheels 22, 22. Lateral paired guide rollers 24, 24 are provided at the top of the running section 8, and branching rollers 25, 26 are provided outside the paired guide rollers 24, 24, respectively, and are guided by guide tracks 28. The branching rollers 25, 26 can be elevated and lowered by elevating sections 30 between a position where the branching rollers 25, 26 are guided by the guide track 28 and a position where the branching rollers 25, 26 are not guided by the guide tracks 28. This controls branching and a rectilinear travel in a branching portion. 32 is a fixed shaft fixed to the overhead running vehicle main body 14 to transmit the weight of the overhead running vehicle main body 14 to the running section 8. A rotative movement shaft 34 coaxial with the fixed shaft 32 is attached to the running section 8 and is extended downward from an opening in a lower surface of the running track 2. The rotative movement shaft 34 moves rotatively with a shaft of the running wheels 22. Further, a bearing 36 rotatively movably connects the fixed shaft 32 and the running section 8 together.

In the electricity feeding section 10, electricity receiving units 12, 12 are provided on the right and left side of the rotative movement shaft 34. For example, a substrate 42 is provided with magnetic substance cores 38 having, for example, an E-shaped cross section for receiving electricity from electricity receiving coils 40 as well as a rectifying circuit and the like. The substrate 42 thus serves as a power source for the overhead running vehicle 7. For example, vertical paired Litz wires 44 used both as electricity feeding lines and as communication lines are provided in each of the electricity feeding tracks 5, 6. The vertical Litz wires 44, 44 form a loop, and a dog 46 is away from (laterally outside) the vertical Litz wires 44, 44 to indicate a stop position. 47 is a linear sensor provided on, for example, the overhead running vehicle main body 14 or the like. 48 is a detected plate attached to the running track 2. The detected plate 48 is placed as far from the Litz wires 44, 44 as possible to reduce noise from the linear sensor 47. The linear sensor 47 detects a position with respect to the detected plate 48. When the position of the detected plate 48 is known, the absolute position of the overhead running vehicle 7 is determined.

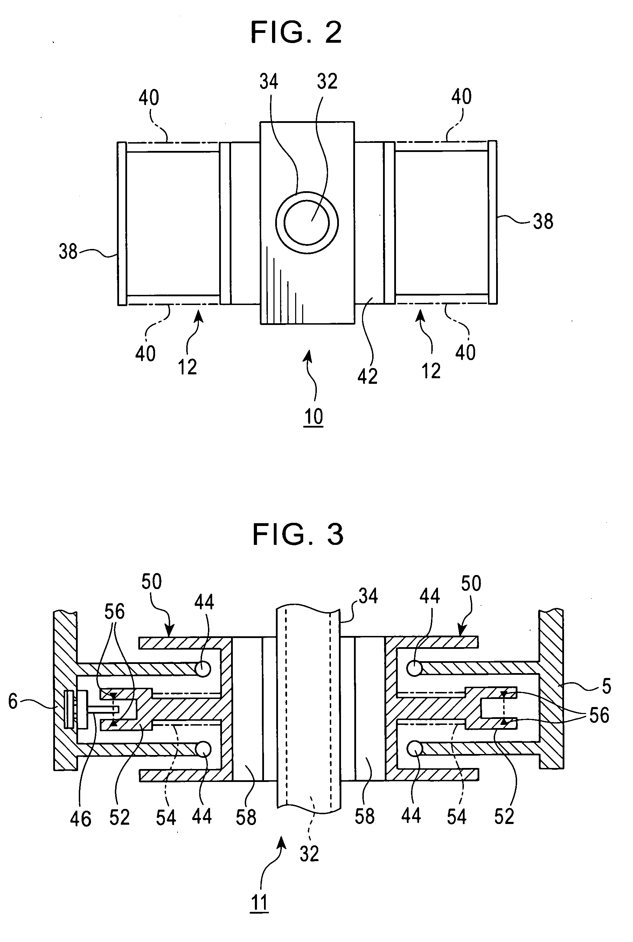

Figure 2 shows the configuration of the electricity feeding section 10. The electricity feeding section 10 is attached to the rotative movement shaft 34. The electricity receiving units 12 are attached to the right and left sides of the electricity feeding section 10. The electricity feeding section 10 and the electricity receiving units 12 move rotatively in unison with an axel of the running wheels 22. Each of the magnetic substance cores 38 extends to a position laterally outside the corresponding Litz wires 44, 44 in the corresponding electricity feeding tracks 5, 6. Each of the electricity receiving coils 40 is wound around a central one of, for example, three vertical magnetic substance cores to receive electricity. The substrate 42 rectifies the electricity.

Figure 3 shows the configuration of a communication section 11. The communication section 11 is also attached to the rotative movement shaft 34. The communication section 11 has its direction changed in unison with the axel of the running wheels 22. Communication units 50, 50 are provided on the right and left sides of the communication section 11. Pickups 52 each comprising a pickup coil 54 detect signals flowing through the respective Litz wires 44 or transmit signals to the Litz wires 44. The Litz wires 44 have a electricity feeding frequency of, for example, 9 KHz and their communication frequency is high and between for example, 100 KHz and 1 MHz. The communication frequency is tenfold or more higher than the electricity feeding frequency. By making the communication and electricity feeding frequencies markedly different from each other, it is possible to reduce noise in a communication band. Communication is made with a controller and another overhead running vehicle in the overhead running vehicle system as well as a ground station (not shown in the drawings).

The dog 46 is provided in, for example, one of the electricity feeding tracks 5, 6 to indicate the stop position or the like of the overhead running vehicle 7. The corresponding pickup 52 is provided with a photo interrupter 56. The dog 46 interrupts light traveling from a light emitting side to light receiving side of the photo interrupter 56. The dog 46 is thus detected. It is possible to use an arbitrary type of dog and an arbitrary type of sensor for detecting the dog are arbitrary. 58 is a substrate of each of the communication units 50 which transmits and receives signals and which detects the dog 46.

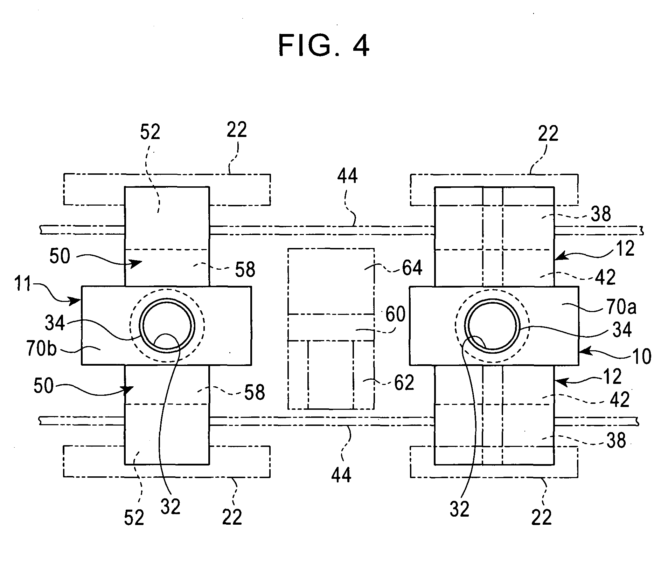

Figure 4 shows the arrangement of a front and a rear bogie vehicles 70a, 70b. The fixed shaft 32 supports the overhead running vehicle main body 14. For example, the front bogie vehicle 70a is provided with the electricity receiving units 12, 12 are provided on the right and left sides. The rear bogie vehicle 70b is provided with the communication units 50, 50 on the right and left sides. Further, a frame (not shown in the drawings) is provided so as to join the fixed shafts 32, 32 together. The frame is provided with a driving wheel 60, a speed changer 62, and a running motor 64. The bogie vehicles 70a, 70b can be driven using upper bottom surfaces of the running track.

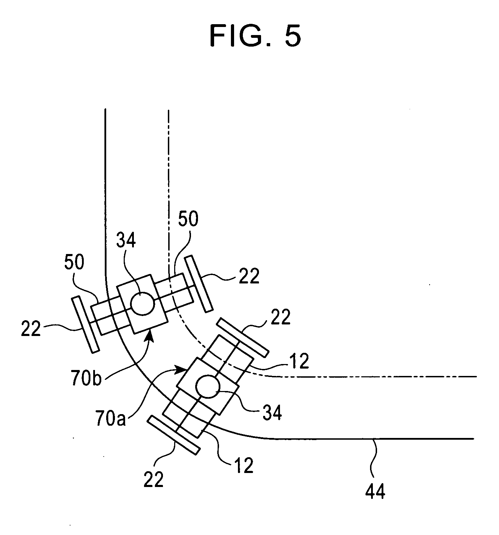

Figure 5 shows how the bogie vehicles run at a curve. The Litz wires 44 can be laid on both the right and left sides of the running track, but in this figure, the Litz wire 44 is laid only on one side for simplification. The electricity receiving units 12 move rotatively in a horizontal plane in unison with the axel of the running wheels 22. The running wheels 22 are guided by the running track. Accordingly, the electricity receiving units 12 are maintained at the correct positions with respect to the Litz wires 44. Similarly, the communication units 50 move rotatively in unison with the axel of the running wheels 22. Accordingly, even at a curve, the communication units 50 are maintained at the correct positions with respect to the Litz wires 44. Thus, reception of electricity and communication can be accomplished at a curve without creating any problems.

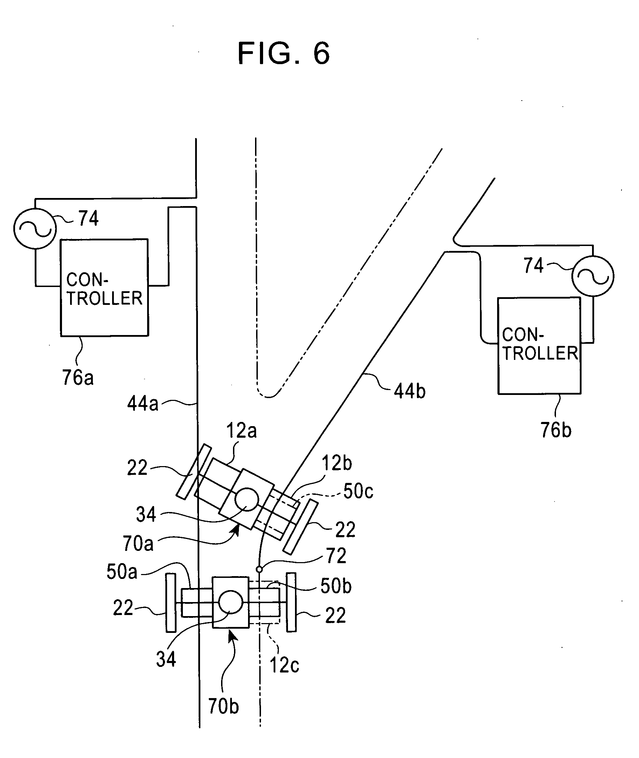

Figure 6 shows a branch in the running track. 44a is a Litz wire laid on one side of the rectilinear side. 44b is a Litz wire laid on one side of the branching side and starting at a start end 72. Further, the Litz wires 44a, 44b are laid in a vertical direction and form respective loops. 74 is a power source and 76a, 76b are controllers. Different power sources and different controllers are used for the branching side and for the rectilinear side.

If the overhead running vehicle runs straight through the branching portion, the Litz wire 44a can be used to constantly receive electricity and make communications. The question is how to accomplish this if the bogie vehicle changes its course to a branch as shown in Figure 6. For the bogie vehicle 70a, the left electricity receiving units 12a is separated from the Litz wire 44a, while the electricity receiving unit 12b can contact with the Litz wire 44b to receive electricity. Then, the electricity receiving unit 12a starts to leave the Litz wire 44a at a start point of the branch, where the start end 72 is located. Since the Litz wire 44b is laid staring at the start end 72, simultaneous reception of electricity can be accomplished. Likewise, when the bogie vehicle 70a uses the communication unit 50a to communicate with controller 76a until the start end 72 and then passes through the start end 72 and changes its course to the branch, it can communicate with the controller 76b using the Litz wire 44b and the communication unit 50b.

Electricity receiving units and communication units are provided at four points, that is, on the right and left sides of each of the front and rear bogie vehicles 70a, 70b. The same type of unit may be provided in a diagonal direction of each of these four points. Chain lines in Figure 6 show an example in which an electricity receiving unit 12c is provided on the bogie vehicle 70b and in which the communication unit 50c is provided on the bogie vehicle 70a. At the position shown in Figure 6, the electricity receiving unit 12a is separated from the Litz wire 44a, while the electricity receiving unit 12c is located in front of the start end of the Litz wire 44b. Accordingly, the overhead running vehicle does not receive electricity. On the other hand, when the bogie vehicle 70a is provided with the electricity receiving units 12a, 12b on the left and right sides while the bogie vehicle 70b is provided with the communication units 50a, 50b on the left and right sides, reception of electricity and communication can be carried out at arbitrary position in the branching portion.

To solve the above problems, the start end 72 of the Litz wire 44b may be shifted frontward of the running track (upstream side of the running track). However, this not only increases the distance over which the Litz wire must be laid but also causes the two power sources to feed electricity to the same section. Consequently, the power sources must be turned off over a long distance when for example, the running track is subjected to maintenance. Further, each communication unit can simultaneously communicate with the two controllers. It is thus necessary to clarify with which controller the communication unit is communicating. This complicates management of electricity feeding, control of the track guided vehicle, and the procedure of communication.

The embodiment has been described taking the overhead running vehicle by way of example. The description also applies to a track guided vehicle system running on the ground. Further, in the example shown in the embodiment, the overhead running vehicle runs while being suspended from the running track or electricity feeding track. However, the overhead running vehicle runs on the electricity feeding track or running track.

The embodiment produces the following effects. (1) Reception of electricity and communication can be continuously carried out even at a curve or in a branching portion. (2) The electricity feeding line can also be used as a communication line. (3) The amount of electricity feeding line laid can be minimized. The embodiment can avoid causing the two power sources to feed electricity to the same section or causing the two controllers to simultaneously given an instruction. (4) The maintenance of the electricity receiving units and communication units is easy. That is, the overhead running vehicle can be moved to an area without the electricity feeding track, where the electricity receiving units or communication units can be removed from sides of the overhead running vehicle.

## Claims

1. A track guided vehicle system comprising an electricity feeding line laid parallel with a running track and bogie vehicles rotatively movably connected to a track guided vehicle main body, the bogie vehicles being guided by the running track to run, the track guided vehicle system being **characterized in that** electricity receiving units are provided on a right and left sides of the bogie vehicle.

2. A track guided vehicle system according to Claim 1, **characterized in that** the bogie vehicles are provided in a front and rear of a track guided vehicle, and electricity receiving units are provided on the right and left side of one of the bogie vehicles, while communication units are provided on the right and left side of the other bogie vehicle.

3. A track guided vehicle system according to Claim 2, **characterized in that** the electricity receiving units are connected to a rotative movement shaft of the bogie vehicle that can move rotatively with respect to the track guided vehicle main body.
